# EUROPEAN PATENT APPLICATION

(11) **EP 3 628 974 A1**
(43) Date of publication of application: **01.04.2020**
(21) Application number: 18196992.4
(22) Date of filing: 26.09.2018
(51) Int. Cl.: G01C 21/36, G06Q 10/00, G06F 16/2457, G06F 16/9535

(54) **A COMPUTER IMPLEMENTED METHOD AND A SYSTEM FOR PROPOSING AN ACTIVITY**

(71) Applicant: Valeo Systemes Thermiques, 78322 Le Mesnil Saint-Denis (FR)
(72) Inventor: DE PELSEMAEKER, Georges, 78322 LE MESNIL SAINT DENIS CEDEX (FR); CLEMARON, Laetitia, 78322 LE MESNIL SAINT-DENIS CEDEX (FR); DEVEYCX, Marion, 78322 LE MESNIL SAINT-DENIS (FR)
(74) Representative: Metz, Gaëlle

(57) **Abstract**

A computer-implemented method for proposing an activity, comprising steps of: obtaining 101 navigation data, indicative of a geographical start point S and user navigation constrains; determining 102 an activity area A with a perimeter defined by the start point S and the navigation constrains; obtaining 103 user profile information; obtaining 104 activity preference information, wherein each activity is associated with preferred environmental conditions; obtaining 105 environmental conditions data for the activity area A; determining 106 a plurality of activity destinations, based on the activity preference information and the user profile information, within the activity area A; ranking 107 the plurality of activity destinations based on environmental conditions data; outputting 108 at least one top candidate activity destination.

## Description

### FIELD OF THE INVENTION

The invention relates to a method for proposing an activity. In particular, the invention relates to a method for proposing an activity in view of multiple criteria.

### BACKGROUND OF THE INVENTION

Air pollution is a serious concern for people because of its harmful effects to health - both in physical and psychological sense. Passengers travelling in vehicles are especially at risk, as the vehicles are part of traffic existing in urbanized areas, which tend to have higher concentration of air pollution and higher levels of pollutant gases and particles. Naturally, people commuting on foot, on bicycles or motorcycles are even more concerned.

Pollution levels are monitored by government agencies and private entities. The measurements are often provided in form of so called pollution maps. For example, a layer of visually represented information is added to a classic map, so that pollution concentration within a specific area or region can be determined and evaluated. Such maps usually have a set time-resolution, which means that the information is updated for example once an hour or once a day. Pollution map data is obtained for example by measuring pollution with a number of measuring stations or pollution measurement devices of a fixed position.

A typical navigation system, for example vehicle navigation system, is configured to propose one or more route candidates between a starting point and selected destination point. The routes are usually ranked based on several criteria, inter alia distance, time or cost.

People willing to perform activities, such as sport activities, sightseeing, hiking etc. have a difficult task of taking into account all the factors which may contribute to quality of such endeavor. In particular, some activities are best performed in certain conditions, while being almost non-feasible if those conditions are not met. The pollution level or allergen presence may affect the quality or safety of performing certain activities. Additionally, some activities may appear as not suitable for the apparent conditions, while in fact there may be several options for performing them, of which the user may not be aware at the time of determining her future actions.

It would thus be desirable to provide a method and a system which would facilitate proposal of activities to be performed, which would take into account factors contributing to their quality and suitability.

### SUMMARY OF THE INVENTION

The object of the invention is, among others, a computer-implemented method for proposing an activity, comprising steps of: obtaining navigation data, indicative of a geographical start point S and user navigation constrains; determining an activity area A with a perimeter defined by the start point S and the navigation constrains; obtaining user profile information; obtaining activity preference information, wherein each activity is associated with preferred environmental conditions; obtaining environmental conditions data for the activity area A; determining a plurality of activity destinations, based on the activity preference information and the user profile information, within the activity area A; ranking the plurality of activity destinations based on environmental conditions data; outputting at least one top candidate activity destination.

Preferably, the user navigation constrains relate to at least one of the group: travel time, travel distance, travel cost.

Preferably, the user profile information comprises at least one of the group: age, sex, respiratory diseases, allergies.

Preferably, the activity preference information is determined based on past user behavior data.

Preferably, the activity preference information is provided directly by the user.

Preferably, the activity preference information concerns time of activity and/or duration of activity.

Preferably, the activity preference information comprises a plurality of activity subgroups, each relating to different environmental conditions.

Preferably, the environmental condition is at least one of the group: pollution level, allergen level.

Preferably, the environmental condition concerns at least one of the group: air temperature, barometric pressure, wind, solar radiation, humidity, precipitation, suspensions.

Another object of the invention is a system comprising: communication means configured to obtain navigation data, indicative of a geographical start point S and user navigation constrains; user profile information; activity preference information, wherein each activity is associated with preferred environmental conditions; environmental conditions data; control means configured to determine an activity area A with a perimeter defined by the start point S and the navigation constrains; and to determine a plurality of activity destinations, based on the activity preference information and the user profile information, within the activity area A; being further configured to rank the plurality of activity destinations based on environmental conditions data; output means configured to output at least one top candidate activity destination.

Another object of the invention is a computer readable storage medium storing a program of instructions executable by a machine to perform a method as described above.

### BRIEF DESCRITPTION OF DRAWINGS

Examples of the invention will be apparent from and described in detail with reference to the accompanying drawings, in which:
- Fig. 1: shows a flowchart presenting a method according to the invention;
- Fig. 2: shows an example of a defined activity area;
- Fig. 3: shows a schematic representation of a system according to invention.

### DETAILED DESCRIPTION OF EMBODIMENTS

The method and the system described hereinafter relate to proposals of activities. By the term 'activity' it is meant any action which is performed by at least one person, which requires exposure to environmental conditions such as pollution level, allergens, weather conditions or the like. Several activities can be encompassed by this definition. For example, these may be sports such as running, hiking, cycling, playing football, volleyball etc. Another example is recreational driving of vehicles of various types, such as cabriolets or motorbikes. Yet another activity type may be sightseeing. Further examples are also envisaged.

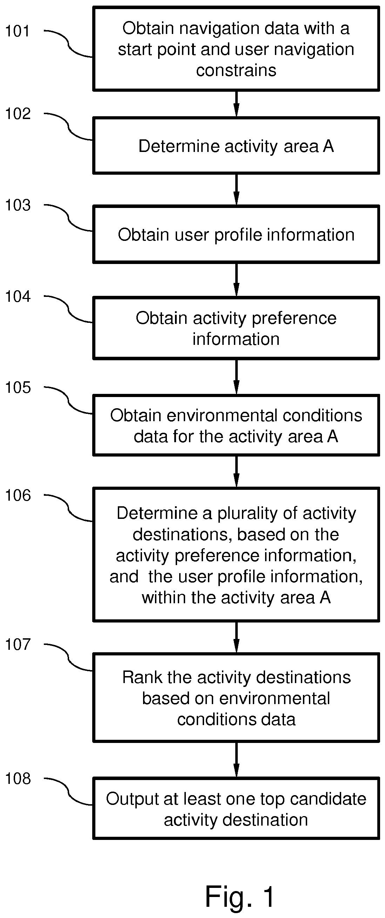

Fig. 1 shows a flowchart presenting the method according to the invention. Firstly, the method comprises obtaining 101 navigation data, which is indicative of a geographical start point S and user navigation constrains. The starting point S can be input manually by the user through a user interface or can be obtained automatically by navigation means in a conventional manner known in the art. The user navigation constrains serve to limit the geographical perimeter which is taken under consideration by the user assuming the defined starting point S. The user navigation constrains can relate to at least one of the group: travel time, travel distance, travel cost. For example, the user may input a constrain relating to travel time so that only activities reachable within 20 minutes of travel will be considered. Additionally or alternatively, the travel distance maybe constrained for example to maximum 10 kilometers. Additionally or alternatively, the cost of the travel, for example including estimated fuel, toll or ticket expenses, can be constrained to maximum 15 Euros.

Next, the method comprises determining 102 an activity area A with a perimeter defined by the start point S and the navigation constrains. In other words, the activity area A is defined by taking into the account the starting point and providing a maximum perimeter which is reachable if the navigation constrains, be it all of the explained above or just the selected ones, are applied.

Further, the method comprises obtaining 103 user profile information. The user profile information can relate for example to the user's age, sex, respiratory diseases, allergies etc.

Further, the method comprises obtaining 104 activity preference information. This may be for example an explicit choice of the activity type by the user or a semi-direct choice in form of indicating a group of similar-type activities.

The activity preference information can be input manually by user, e.g. by means of a dedicated user interface. Alternatively or additionally, it may be supplied automatically, based on past preference information and/or past user behavior data. The same applies to obtaining of the user profile information.

The activity preference information may concerns time of activity, for instance a specific hour or a more general determination, such as morning, midday, afternoon, evening or night. Similarly, the activity preference information may describe a preferred duration of activity. Because the method is adapted to operate on forecast data, the activity preference may relate to activity time further in future, on a different date.

Each activity is associated with preferred environmental conditions. One example of an environmental condition is a pollution level. Preferably, it is described as an AQI value (Air Quality Index), more preferably an CAQI value (Common Air Quality Index). Another example of an environmental condition can relate to a weather condition. In particular, it can relate to air temperature, barometric pressure, wind, solar radiation, humidity, precipitation, suspensions etc. In any case, certain activities are preferably performed under certain environmental conditions. For instance, running can be associated with lack of rain, air temperature range between 10 and 25 degrees Celsius and CAQI level not exceeding 50. Another example is driving a cabriolet, which can be associated with no precipitation and suspensions, air temperature above 20 degrees Celsius, CAQI level not exceeding 70, moderate sun exposure and wind speed not exceeding 40 km/h.

In one example, the activity preference information may comprise a plurality of activity subgroups, each relating to different environmental conditions. In other words, the activities which require similar environmental conditions may be grouped together. For instance, hiking, walking and running may be grouped together and require the same or similar environmental conditions.

Next, the method comprises obtaining 105 environmental conditions data for the activity area A. In particular, the pollution values and weather data may be obtained only for the determined activity area, without the need for more global readings. Preferably, obtaining the environmental conditions data is performed while taking into account the activity preference information, in particular the preferred time and duration of the activity. In this manner, the forecast can be obtained to best represent future conditions for the activity.

Further, the method comprises determining 106 a plurality of activity destinations, based on the activity preference information and the user profile information, within the activity area A. The activity preference information and the user profile information are used to limit the number of possible activities. The user navigation constrains are already used to determine the activity area A. Optionally, if the activity preference information and the user profile information eliminate all the activities, a less strict condition matching may be applied, for example allowing some degree of tolerance. Preferably, in such case, the deviation is communicated to the user. In any case, the list of available activities can be obtained from activity destinations data storage. The activities can be predefined for the specific area or can be determined dynamically, based on the available information. For example, the activities may be associated, in addition to preferred environmental conditions as explained above, with preferred geographical and/or navigation conditions. For example, an activity may be associated with availability of unobstructed area, such as a certain amount of grass without obstacles for playing certain sports. Similarly, some activities may require a certain length of road or path, for example running may require at least with length of at least 500m.

In the next step, the method comprises ranking 107 each of the plurality of activity destinations based on environmental conditions data. In other words, the plurality of determined activity destinations is ranked based on how well will they match the environmental conditions associated with them. Other criteria can additionally be incorporated into the ranking algorithm, such as weather uncertainty, distance, time etc.

Next, the method comprises outputting 108 at least one top candidate activity destination, for example by means of a user interface. Preferably, at least two top candidates are outputted. Preferably, the top candidate activity destinations are outputted together with navigation information allowing to reach the destination.

It is envisaged that the method can obtain additional information which may be presented together with the proposed activity destination and/or which can serve for ranking purposes. This may be for example travel information from websites provided by the users, opinions on activity destinations, social media comments, information of average occupation by people at specific time frames i.e. popularity, etc.

The method may comprise outputting activity destinations with an indication which constrain, e.g. user navigation constrain, would be out of the determined value or scope, for example to a tolerable extent. This may be essential if no activity destination matches the constrains input by the user, or if the environmental conditions do not allow performing any activity without risk for health within the specified area A.

It is to be noted that the steps of obtaining 101 navigation data, obtaining 103 user profile information and obtaining 104 activity preference information do not necessarily have to be performed in the proposed order - other orders are also envisaged.

The above-described method can be carried out by means of cloud computing. In particular, at least part of the steps can be carried out in the cloud, with transmitting the activity destination candidates to the user.

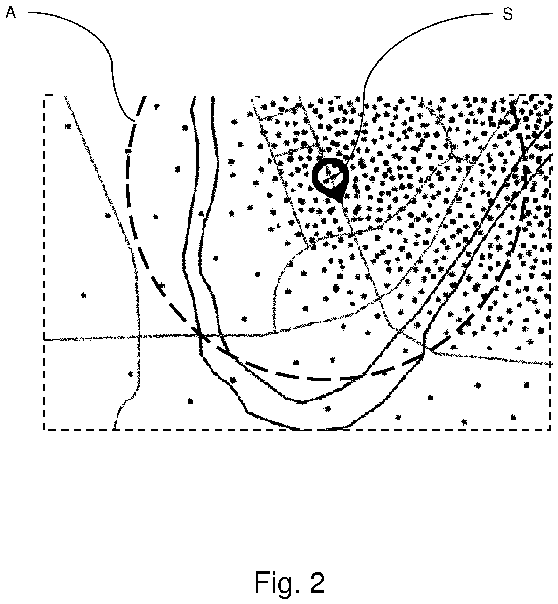

Fig. 2 shows an example of a defined activity area A. The geographical starting point S allows to determine the allowed activity perimeter in view of the user navigation constrains. In this example, the activity area A is constrained by a fixed distance radius with a center in the starting point S, effectively assuming shape of a circle. However, the perimeter may look different depending on the navigation constrains. This may be especially the case if the distance is measured when only roads or defined walk paths are utilized by the navigation system. In Fig. 2 there is also shown a pollution level in the area, by means of dotted indication.

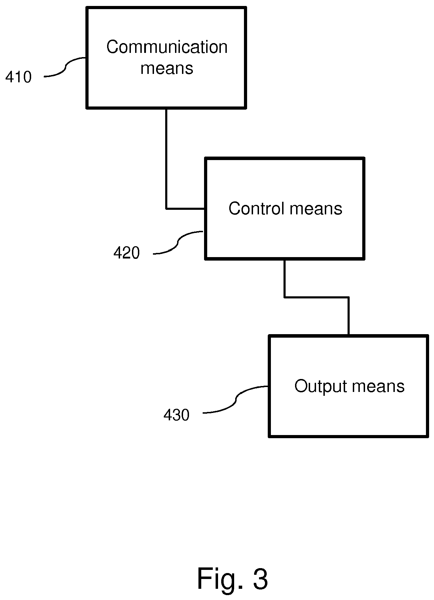

Fig. 3 shows a schematic representation of a system according to invention. A system comprises communication means 410, control means 420 and output means 430.

The communication means 410 are configured to obtain navigation data, indicative of a geographical start point S and user navigation constrains. This may be achieved in a conventional manner known in the art, by means of global positioning system integration, optionally coupled with internet connection to navigation services provider. Preferably, the communication means 410 are adapted to provide internet connection for the system, in particular to cloud computing services.

The communication means 410 are further configured to obtain user profile information; activity preference information, wherein each activity is associated with preferred environmental conditions. These can be obtained for example by integration with any known input means, which might be a part of output means 430, e.g. by means of a touch screen of the vehicle entertainment system or through an application on a smart phone.

The communication means 410 are further adapted to obtain environmental conditions data. In particular, the communication means 410 may be adapted to obtain air pollution forecast data for example in form of the pollution map data, which is indicative of most current air pollution levels within the specified area and a forecast for air pollution levels in the future, from a data supplier. The communication means 410 may also be adapted to obtain information on weather conditions and forecast as explained above. Similarly, the communication means 410 may be adapted to obtain information on presence of allergens within the specific area.

The control means 420 are configured to determine an activity area A with a perimeter defined by the start point S and the navigation constrains.

The control means 420 are further adapted to determine a plurality of activity destinations, based on the activity preference information and the user profile information, within the activity area A. Ranking of the plurality of activity destinations, based on environmental conditions data, is performed by the control means 420 as well.

The output means 430 are configured to output at least one top candidate activity destination, preferably at least two or more. This may be carried out by means of conventional output means in form of a screen for visual presentation and/or through audio sound system for acoustic presentation. Preferably, the output means 430 are configured to receive the selection of the activity by the user, for example by touch interface. This may result in direct transferring to navigation routing for guiding the user to the activity by conventional means or by navigation services built in the system.

The system may be incorporated into the onboard system of a vehicle. It may also be a software executable on a personal device, such as a personal computer, a mobile phone, tablet etc.

It is understood that embodiments of the present invention can be carried out in form of hardware, software or a combination of both. Any such software can be stored in the form of a volatile or non-volatile storage, for example a storage like a ROM, whether erasable or rewritable or not, or in the form of memory such as, for example RAM, memory chips, device or integrated circuits or an optically or magnetically readable medium such as, for example, a CD, DVD, magnetic disk or magnetic tape. It is understood that the storage devices and storage media are embodiments of machine-readable storage that are suitable for storing program or programs that, when executed, implement embodiments of the present invention. Accordingly, embodiments provide a program comprising code for implementing a system or method as described and a machine readable storage storing such a program. Further, embodiments of the present invention may be conveyed electronically via any medium such as a communication signal carried over a wired or wireless connection and embodiments suitably encompass the same.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. A computer-implemented method for proposing an activity, comprising steps of:
- obtaining 101 navigation data, indicative of a geographical start point S and user navigation constrains;
- determining 102 an activity area A with a perimeter defined by the start point S and the navigation constrains;
- obtaining 103 user profile information;
- obtaining 104 activity preference information, wherein each activity is associated with preferred environmental conditions;
- obtaining 105 environmental conditions data for the activity area A;
- determining 106 a plurality of activity destinations, based on the activity preference information and the user profile information, within the activity area A;
- ranking 107 the plurality of activity destinations based on environmental conditions data;
- outputting 108 at least one top candidate activity destination.

2. A method according to claim 1, wherein the user navigation constrains relate to at least one of the group: travel time, travel distance, travel cost.

3. A method according to any preceding claim, wherein the user profile information comprises at least one of the group: age, sex, respiratory diseases, allergies.

4. A method according to any preceding claim, wherein the activity preference information is determined based on past user behavior data.

5. A method according to any preceding claim, wherein the activity preference information is provided directly by the user.

6. A method according to any preceding claim, wherein the activity preference information concerns time of activity and/or duration of activity.

7. A method according to any preceding claim, wherein the activity preference information comprises a plurality of activity subgroups, each relating to different environmental conditions.

8. A method according to any preceding claim, wherein the environmental condition is at least one of the group: pollution level, allergen level.

9. A method according to any preceding claim, wherein the environmental condition concerns at least one of the group: air temperature, barometric pressure, wind, solar radiation, humidity, precipitation, suspensions.

10. A system comprising:
- communication means 410 configured to obtain navigation data, indicative of a geographical start point S and user navigation constrains; user profile information; activity preference information, wherein each activity is associated with preferred environmental conditions; environmental conditions data;
- control means 420 configured to determine an activity area A with a perimeter defined by the start point S and the navigation constrains; and to determine a plurality of activity destinations, based on the activity preference information and the user profile information, within the activity area A; being further configured to rank the plurality of activity destinations based on environmental conditions data;
- output means 430 configured to output at least two top candidate activity destinations.

11. A computer readable storage medium storing a program of instructions executable by a machine to perform a method according to any of claims 1-9.
